(19) Europäisches Patentamt
European Patent Office
Office européen des brevets

(11) **EP 4 269 158 A1**

(12) **EUROPEAN PATENT APPLICATION**
published in accordance with Art. 153(4) EPC

(43) Date of publication:
**01.11.2023 Bulletin 2023/44**

(21) Application number: **21910460.1**

(22) Date of filing: **14.12.2021**

(51) International Patent Classification (IPC):
*B60L 3/00* (2019.01)  *B60L 13/00* (2006.01)
*B60L 50/53* (2019.01)  *B60L 58/12* (2019.01)
*H01M 10/44* (2006.01)  *H01M 10/48* (2006.01)
*H02J 7/00* (2006.01)  *H02J 7/04* (2006.01)

(52) Cooperative Patent Classification (CPC):
**B60L 3/00; B60L 13/00; B60L 50/53; B60L 58/12; H01M 10/44; H01M 10/48; H02J 7/00; H02J 7/04**

(86) International application number:
**PCT/JP2021/045968**

(87) International publication number:
**WO 2022/138311 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.12.2020 JP 2020214812**

(71) Applicant: **Hitachi, Ltd.**
**Tokyo 100-8280 (JP)**

(72) Inventors:
• **UEDA, Suguru**
**Tokyo 100-8280 (JP)**

• **HONKURA, Kohei**
**Tokyo 100-8280 (JP)**
• **NAITO, Shunya**
**Tokyo 100-8280 (JP)**
• **TAKAHASHI, Chiaki**
**Tokyo 100-8280 (JP)**
• **SHINOMIYA, Takeshi**
**Tokyo 100-8280 (JP)**

(74) Representative: **Mewburn Ellis LLP**
**Aurora Building**
**Counterslip**
**Bristol BS1 6BX (GB)**

(54) **POWER STORAGE SYSTEM AND POWER STORAGE METHOD**

(57) Provided are a power storage system and a power storage method with which it is possible to appropriately control the charging rate in an electrified section in which a rail vehicle is traveling, thereby enabling a storage battery to be used more stably for prolonged periods of time. The present invention is characterized by comprising: a storage battery (41) provided to a rail vehicle (10) that can travel in an electrified section (D) and a non-electrified section (C); and a control unit (61) that controls the charging rate of the storage battery (41), the control unit (61) performing control to reduce the charging rate of the storage battery (41) to no higher than a target charging rate when the rail vehicle (10) enters the electrified section (D) from a non-electrified section (C1), and then performs control to start charging of the storage battery (41) at a prescribed timing in order to achieve the charging rate required for travel in the next non-electrified section (C2).

FIG.5

**Description**

Technical Field

The present invention relates to a power storage system and a power storage method, and particularly relates to a power storage system and a power storage method that controls charging of a storage battery used for a rail vehicle.

Background Art

In order to prevent global warming, it is required to reduce the emission amount of carbon dioxide gas, and for example, regarding an automobile using a gasoline engine which is one of the large emission sources of carbon dioxide gas, substitution to a hybrid electric automobile, an electric automobile, or the like is in progress. Here, examples of the chargeable/dischargeable storage battery (secondary battery) include a lithium-ion secondary battery, a nickel hydrogen battery, a lead battery, and an electric double layer capacitor. Among them, in particular, a secondary battery system including a plurality of high power density battery cells, such as lithium-ion batteries, is widely used for industrial applications, and in recent years, a secondary battery system for a vehicle having a high voltage and a large capacity has begun to spread.

Furthermore, in the field of rail vehicles, secondary battery systems are widely used for energy saving. In particular, in recent years, a storage battery train equipped with a secondary battery system has begun to spread for the purpose of reducing the environmental load of a rail vehicle traveling in a non-electrified section without an overhead contact line.

The storage battery train travels using overhead contact line power as a power source in an electrified section with an overhead contact line, but travels using a secondary battery system as a power source in a non-electrified section without an overhead contact line. Therefore, a large secondary battery system represented by a power source for propulsion of a storage battery train is required to have high voltage and high output, and thus is generally configured by connecting a plurality of battery cells in series and parallel. Furthermore, a lithium-ion battery is often used in each battery cell.

Here, in general, a range of charging rates (SOC) for guaranteeing operation of the secondary battery as a safe product is defined as specifications. Operating the secondary battery beyond the upper and lower limits of the SOC range defined in the specifications causes a failure in the battery system and also causes a decrease in the life of the battery system, thus, it is necessary to avoid such an operation. In addition, when the SOC continues to be in a high state even within the SOC range defined in the specifications, degradation accelerates, causing a decrease in battery capacity, an increase in internal resistance, and fluctuations in output.

As described above, managing the battery system so that the charging rate of the secondary battery does not increase is an important matter in reducing battery degradation. For example, PTL 1 discloses a control technique including calculating a target charging rate of a battery at the time of entering a non-electrified section on the basis of the amount of power used by a rail vehicle in the non-electrified section, and charging a storage battery in an electrified section according to the calculated target charging rate.

Citation List

Patent Literature

PTL 1: JP 2017-189062 A

Summary of Invention

Technical Problem

In a method in PTL 1, the charging rate of the secondary battery in the non-electrified section can be minimized and hence, it is effective for reducing degradation of the secondary battery in the non-electrified section. However, PTL 1 does not mention a control technique and an operation method for reducing the charging rate of the secondary battery in the electrified section. In particular, in the electrified section, it is necessary to charge the secondary battery in preparation for travel of the rail vehicle in the non-electrified section. Therefore, the charging rate of the secondary battery in the electrified section gradually shifts to a high state as the vehicle travels. As a result, if the timing of starting charging of the secondary battery is not appropriately controlled, the secondary battery is exposed to a high SOC state for a long period of time in the electrified section, and degradation of the secondary battery progresses.

When the degradation of the secondary battery progresses, the battery capacity decreases and the internal resistance increases. Therefore, as the battery degrades, the amount of power and output of the battery system gradually decrease, and the battery system finally becomes unusable. In addition, if the output of the battery system decreases while the rail vehicle is traveling, it may lead to the vehicle being stopped. In order to prevent such a problem, it is necessary to replace the battery system in which degradation of the secondary battery has progressed as appropriate. However, a large number of secondary batteries are used in a battery system for a storage battery train so as to withstand vehicle traveling, and the cost ratio of the secondary batteries in the entire vehicle system is high. Therefore, the control technique for reducing the degradation of the secondary battery is also an important control technique from a viewpoint of reducing the running cost of the vehicle system.

The present invention has been made in view of the above points, and an object thereof is to provide a power storage system and a power storage method with which it is possible to appropriately control the charging rate in an electrified section in which a rail vehicle is traveling, thereby enabling a storage battery to be used more stably for prolonged periods of time.

Solution to Problem

In order to achieve the above object, one of the representative power storage systems of the present invention is characterized by including: a storage battery provided to a rail vehicle that can travel in an electrified section and a non-electrified section; and a control unit that controls a charging rate of the storage battery, in which the control unit performs control to reduce the charging rate of the storage battery to no higher than a target charging rate when the rail vehicle enters the electrified section from a non-electrified section, and then performs control to start charging of the storage battery at a prescribed timing in order to achieve the charging rate required for travel in the next non-electrified section.

Advantageous Effects of Invention

According to the present invention, with the power storage system and the power storage method, it is possible to appropriately control the charging rate in an electrified section in which a rail vehicle is traveling, thereby enabling a storage battery to be used more stably for prolonged periods of time.

Problems, configurations, and effects other than the above will be clarified by the following embodiment.

Brief Description of Drawings

[FIG. 1] FIG. 1 is an overview diagram illustrating an example of an entire system to which a power storage system of the present invention is applied.
[FIG. 2] FIG. 2 is a block diagram illustrating an embodiment of the power storage system of the present invention.
[FIG. 3] FIG. 3 is a schematic diagram indicating an example of a general relationship between a charging rate of a battery and a degree of degradation of the battery over time.
[FIG. 4] FIG. 4 is a diagram illustrating an example of a table of travel data used in the power storage system of the present invention.
[FIG. 5] FIG. 5 is a schematic diagram illustrating a first example of a method for controlling the charging rate of a storage battery in the power storage system of the present invention.
[FIG. 6] FIG. 6 is a schematic diagram illustrating a second example of the method for controlling the charging rate of the storage battery in the power storage system of the present invention.
[FIG. 7] FIG. 7 is a schematic diagram illustrating a third example of the method for controlling the charging rate of the storage battery in the power storage system of the present invention.
[FIG. 8] FIG. 8 is a schematic diagram illustrating a fourth example of the method for controlling the charging rate of the storage battery in the power storage system of the present invention.

Description of Embodiment

Hereinafter, an embodiment of the present invention will be described with reference to the drawings. Furthermore, there may be a case where, in each drawing, components having the same function are denoted with the same reference numeral, and a repeated description thereof is omitted. Moreover, hereinafter, a storage battery (secondary battery) is sometimes simply abbreviated as a "battery".

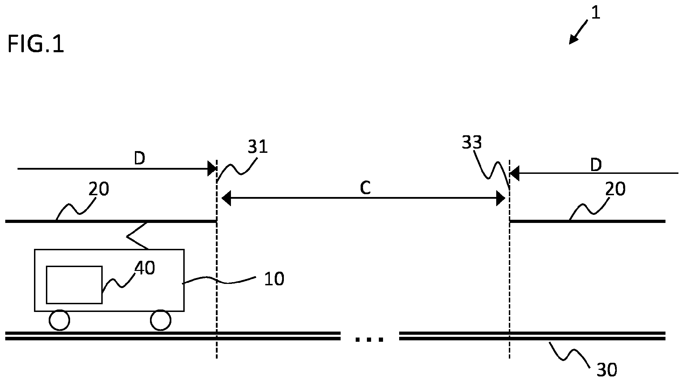

FIG. 1 is an overview diagram illustrating an example of a system to which a power storage system of the present invention is applied. A system 1 includes a rail vehicle 10, overhead contact lines 20, and a route 30. The rail vehicle 10 is equipped with a power storage system 40. In an electrified section D with the overhead contact line 20, the rail vehicle 10 travels on the route 30 with power supplied from the overhead contact line 20. In addition, in the electrified section D, the power storage system 40 is charged with the power supplied from the overhead contact line 20. In the example of FIG. 1, there exists a non-electrified section C without an overhead contact line between a point 31 and a point 33, which is between two electrified sections D, each with the overhead contact line 20. In the non-electrified section C, the rail vehicle 10 travels by using the power charged in the power storage system 40.

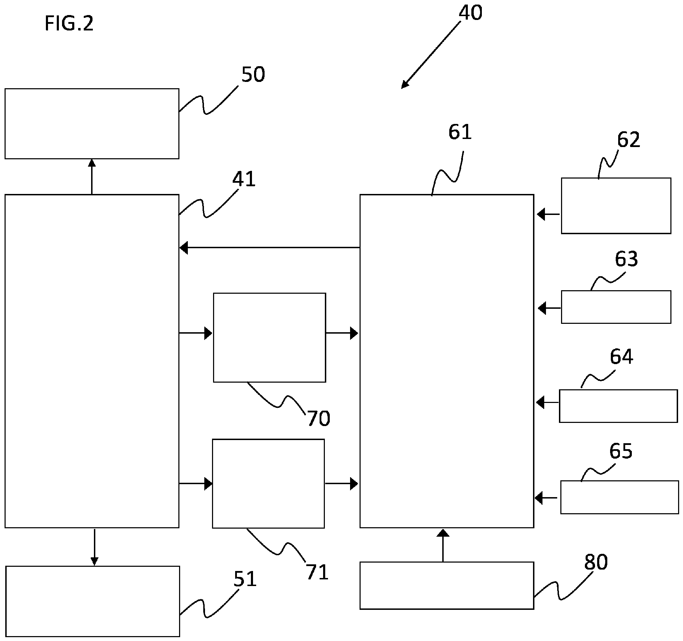

FIG. 2 is a block diagram illustrating an embodiment of the power storage system of the present invention. The power storage system 40 mainly includes a storage battery 41 and a control unit 61. The power storage system 40 has a function of controlling a timing of charging the storage battery 41 with the power supplied from the overhead contact line 20. The control unit 61 can acquire target charging rate data 62, acceptable current value data 63, travel data 64, and auxiliary machine power consumption data 65. Here, a recording unit or the like can be provided in the power storage system 40 to store the target charging rate data 62 as target charging rate data of the storage battery 41, the acceptable current value data 63 as a table in which an acceptable current value of the storage battery 41 is recorded, the travel data 64 as a table in which information including an operating schedule of the rail vehicle 10 is recorded, the auxiliary machine power consumption data 65 as a power consumption table in which the power consumption of an auxiliary machine 50 is recorded. Alternatively, such data may be recorded in the control unit 61.

Furthermore, in FIG. 2, a charging rate detector 70 and a temperature detector 71 are provided outside the control unit 61. Moreover, a timing device 80 can be provided.

The storage battery 41 is a secondary battery, and is, for example, a lithium-ion battery, a nickel hydrogen battery, a lead battery, an electric double layer capacitor, or the like. In particular, a secondary battery system including a plurality of high power density battery cells, such as lithium-ion batteries, can be applied to the storage battery 41. The storage battery 41 can supply power to the auxiliary machine 50 and a driving device 51. Furthermore, regenerative power generated by the overhead contact line 20, the regenerative brake of the rail vehicle 10, or the like can be stored in the storage battery 41.

The auxiliary machine 50 is a device that operates with the power of the storage battery 41 mounted inside the rail vehicle 10, and is, for example, a blower fan. The auxiliary machine 50 can be supplied with the power from the storage battery 41 even while the rail vehicle 10 is traveling in the electrified section D. On the other hand, when control is performed without using the power from the storage battery 41, the auxiliary machine 50 can also obtain power from the overhead contact line 20. Furthermore, the auxiliary machine 50 may include an inverter. Note that the auxiliary machine 50 does not include the driving device 51.

The driving device 51 is a device that includes a motor or the like and generates propulsion for travel of the rail vehicle 10. The driving device 51 is driven with the power supplied from the overhead contact line 20 in the electrified section D, and is driven with the power supplied from the storage battery 41 in the non-electrified section C.

The control unit 61 includes, for example, a CPU and a control circuit. The control unit 61 performs a prescribed calculation on the basis of information input from the charging rate detector 70, the temperature detector 71, and the timing device 80 and information (the target charging rate data 62, the acceptable current value data 63, the travel data 64, the auxiliary machine power consumption data 65) stored in the power storage system 40. The control unit 61 performs processing to control the charging rate of the storage battery 41 in the electrified section D on the basis of this calculation result. As a result, the control unit 61 manages the charging rate and the timing of starting charging of the storage battery 41. Details of the control processing will be described later.

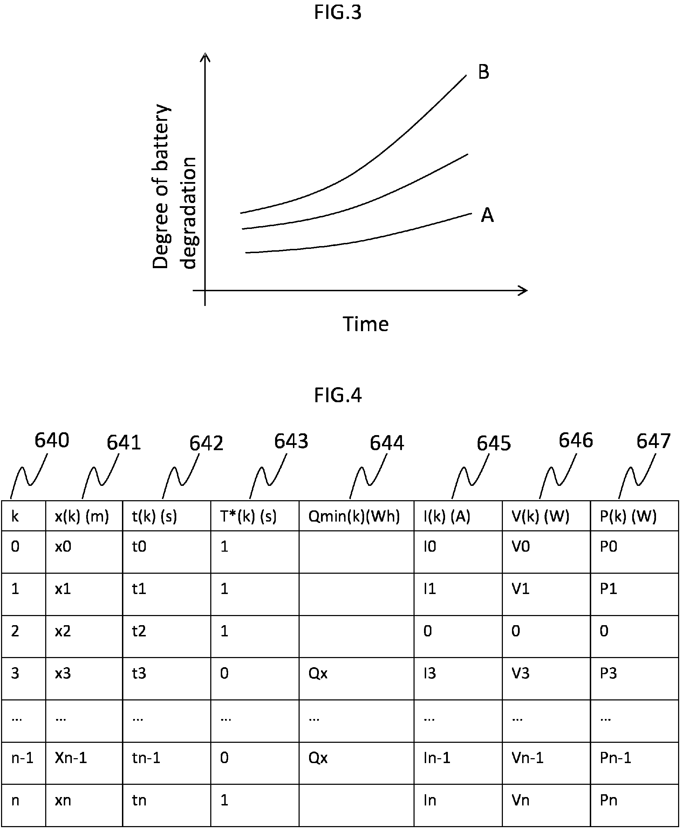

The target charging rate data 62 includes data indicating a target charging rate ($SOC\_t$) of the storage battery 41 in the electrified section D and data indicating the amount of power ($Q\_t$) of the battery corresponding to the charging rate. Here, the value of the target charging rate is a fixed value preset on the basis of a degradation characteristic of the battery. The value of the target charging rate can be determined, for example, by conducting a test (storage test) in which a battery is stored with the charging rate maintained at a constant level. In the storage test, a plurality of batteries having different charging rates are stored and degrees of degradation are examined over time while maintaining each charging rate at a constant level to examine characteristics of the batteries for each charging rate. In general, degradation of the battery is more likely to progress as the battery is used at a higher charging rate, and thus a charging rate at which degradation of the battery is assumed to be within an allowable range is obtained from the storage test. Accordingly, the value $SOC\_t$ of the target charging rate and the amount of power $Q\_t$ corresponding to the value $SOC\_t$ can be determined. The target charging rate $SOC\_t$ can be treated as a target upper limit value of the charging rate. This is because degradation of the battery progresses slower as the charging rate is lower. A relationship between the charging rate and degree of degradation of a general battery will be described later with reference to FIG. 3.

The table of the acceptable current value data 63 is a data table indicating a correspondence relationship between an outside temperature T at the time of charging the battery and a current value I (acceptable current value) that can be made to flow through the battery at the outside temperature T. The value of the acceptable current can be determined, for example, from a heat generation characteristic of the battery when a charging test is conducted on the battery. In general, when a charging current I is made to flow through a battery, Joule heat is generated by an internal resistance of the battery, and the temperature of the battery increases by $\Delta T(°C)$. The degradation of the battery is more likely to progress as the battery is used under high temperatures, and thus a temperature range within which battery degradation is allowable can be established. Then, the above-described temperature increase range $\Delta T$ is obtained from a charge and discharge test or the like, and a corresponding charging current value I can be established as an acceptable current value, so as to ensure that the temperature of the battery falls within the allowable temperature range, even if the temperature increases by $\Delta T$. Note that the temperature increase range $\Delta T$ of the battery during charging generally changes depending on outside air temperatures T. Therefore, in the table of the acceptable current value data 63, it is preferable to record acceptable current values I at various outside air temperatures T.

The table of the travel data 64 is a data table indicating a correspondence relationship among a position x and time t of the rail vehicle, time t* at which a transition occurs between the electrified section D and the non-electrified section C, a minimum amount of power Qmin required for travel of the rail vehicle in each non-electrified section C, and a charge/discharge current (current I), a voltage (voltage V), and a charge/discharge power (power P) in the storage battery 41. The position x and the time t of the rail vehicle are preliminarily obtained from a traveling schedule of the rail vehicle. The time t* at which a transition occurs between the electrified section D and the non-electrified section C is also obtained from the traveling schedule of the rail vehicle.

Here, not all the information of the current I, the voltage V, and the power P in the storage battery 41 is necessary, and it is sufficient that at least either a set of the current I and the voltage V or the power P is described. Furthermore, the minimum required amount of power Qmin is the minimum required amount of power that the storage battery 41 should secure at a specific position in the non-electrified section C, and corresponds to the amount of power required for securing the minimum output from the storage battery 41. For example, the minimum required amount of power Qmin is an amount of power for travel in the remaining non-electrified section C when the rail vehicle is stalled or the like, an amount of power required for air conditioning or the like in the vehicle at that time, or the like. This Qmin is an amount that can be preliminarily determined according to the traveling route and the traveling section of the rail vehicle, and the value of Qmin increases in a case where the distance of the remaining non-electrified section C is long, a case where there are many slopes in the traveling section, or the like.

The table of the travel data 64 may preliminarily be registered in the control unit 61. Furthermore, the table of the travel data 64 may be constructed from the travel data of the rail vehicle by recording the current I and the voltage V or the power P acquired by the charging rate detector 70 described later and time information acquired from the timing device 80. Furthermore, the table of the travel data 64 may be constructed by combining the preliminarily registered table and the travel data of the rail vehicle. For example, the preliminarily registered data table may be used as the table of the travel data 64 until the travel data of the rail vehicle is accumulated, and the table of the travel data 64 may be updated on the basis of the actual travel data after the travel data is accumulated. A specific example of the table of the travel data 64 will be described later with reference to FIG. 4.

The table of the auxiliary machine power consumption data 65 is a table that records the power consumption of the auxiliary machine 50 operated with power supplied from the storage battery 41. Specifically, the table is a data table in which the operating rate of the auxiliary machine 50 and the corresponding power consumption are recorded.

The charging rate detector 70 is a device that detects the charging rate of the storage battery 41. The charging rate detector 70 is provided in a battery cell or a module of the storage battery 41, detects the voltage V and the current I of the storage battery 41, and calculates the state of charge of the storage battery 41 and the remaining amount of power of the storage battery 41 at that time. These values are input to the control unit 61.

The temperature detector 71 is a sensor that is provided in a battery cell or a module and detects the temperature of the storage battery 41. The detected temperature of the battery is input to the control unit 61.

The timing device 80 is a device that acquires time information, and inputs the information to the control unit 61. The time information may be clock time information.

FIG. 3 is a schematic diagram indicating an example of a general relationship between the charging rate of a battery and the degree of degradation of the battery over time. In FIG. 3, the vertical axis represents the degree of degradation of the battery, and the horizontal axis represents time. As illustrated in the figure, in a degradation characteristic A in a case of a low charging rate, the degree of degradation of the battery does not progress much with the lapse of time. On the other hand, in a degradation characteristic B in a case of a high charging rate, it can be seen that the degree of degradation of the battery progresses with the lapse of time. From such characteristics, it can be seen that the degradation of the battery hardly progresses by lowering the charging rate of the battery.

FIG. 4 is a diagram illustrating an example of the table of the travel data 64 used in the power storage system of the present invention. The table exemplified in FIG. 4 includes items 640 to 647 for each column in the vertical direction. These pieces of information can be created from schedule information of the rail vehicle. Furthermore, these pieces of information may be constructed by acquiring information from the actual state of the rail vehicle during traveling.

In item 640, orders "k" of data arrangement (k = 0, 1,..., n) are described, and items 641 to 647 are described in a form corresponding to the respective orders k.

In item 641, positions "x(k)" of the rail vehicle during traveling are described. Here, the vehicle position x(k) may be represented by a combination of longitude and latitude. Furthermore, in a case where the travel path is fixed like a rail vehicle, the vehicle position $x(k)$ may be represented by a distance from a reference point (for example, a starting station).

In item 642, times "$t(k)$" during traveling of the rail vehicle are described. Here, the time $t(k)$ may be simply represented by a clock time, or represented by an elapsed time from a departure clock time from the starting station. Furthermore, when there is a disruption in the operating schedule, the times $t(k)$ in the table of the travel data 64 may be corrected by using delay time information. For example, in a case where the rail vehicle stops at a station located at a position $x(m)$ for a period of time $\Delta t$ longer than usual, $\Delta t$ is added to each time $t(k)$ after $m + 1$, thus accounting for the delay. Note that the clock time information can be acquired by using the timing device 80.

In item 643, "$T^* (k) (s)$" is recorded. As the "$T^*(k) (s)$", whether the rail vehicle exists in the electrified section or the non-electrified section at the time "$t(k)$" or the position "$x(k)$" is recorded. As in the case of item 643 in FIG. 4, for example, cases where the rail vehicle exists in the electrified section can be recorded as "1", and cases where the rail vehicle exists in the non-electrified section C can be recorded as "0".

In item 644, values of the minimum required amount of power Qmin described above are recorded. The minimum required amount of power Qmin is recorded in the cases of the non-electrified section (the cases where item 643 takes "0"). Then, the minimum required amount of power Qmin is secured as the minimum required amount of power for travel in the remaining non-electrified section.

In item 645, current values "$I(k)$" output from the storage battery 41 are recorded. In item 646, voltage values "$V(k)$" output from the storage battery 41 are recorded. In item 647, power values "$P(k)$" output from the storage battery 41 are recorded. In the cases of the electrified section (the cases where item 643 takes "1"), the storage battery 41 outputs the power to be consumed by the auxiliary machine 50. Furthermore, in the cases of the non-electrified section (the cases where item 643 takes "0"), the storage battery 41 outputs the power to be consumed by the auxiliary machine 50 and the driving device 51.

Furthermore, it is preferable that a plurality of tables of the travel data 64 as exemplified in FIG. 4 be prepared or updated as appropriate according to the day of the week, the month, and the season. This is because the current I (item 645), the voltage V (item 646), and the power P (item 647) during traveling of the rail vehicle differ depending on the day of the week, the month, and the season. For example, the number of users of the rail vehicle differs between weekdays and Saturdays and Sundays. Therefore, the power consumption value of the rail vehicle during traveling in the non-electrified section differs. Similarly, the frequency of use of air conditioning in the vehicle increases in summer and winter. Therefore, the power consumption during traveling of the vehicle increases. In addition, the frequency of use of a snowproof brake increases in a case where snow accumulates in winter. Therefore, the regenerative power amount in the electrified section decreases, so that it is necessary to change the charging schedule of the vehicle to be described later.

Hereinafter, processing by the control unit 61 for controlling the charging rate of the power storage system in the electrified section will be described with reference to examples of a detailed calculation method.

(First example of method for controlling charging rate)

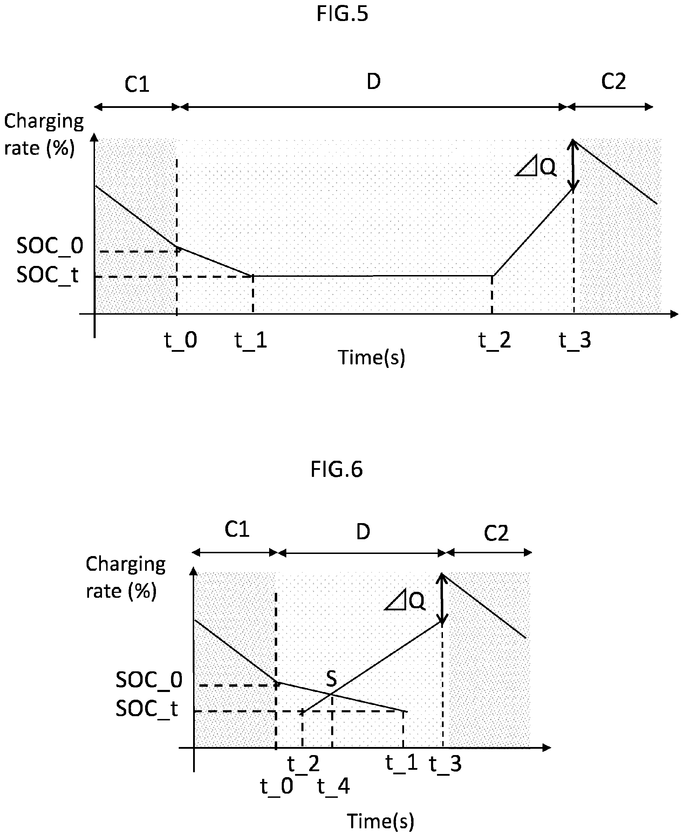

FIG. 5 is a schematic diagram illustrating a first example of a method for controlling the charging rate of a storage battery in the power storage system of the present invention. In FIG. 5, the vertical axis represents the charging rate (%), and the horizontal axis represents time (s). FIG. 5 illustrates a case where the rail vehicle travels in the order of a non-electrified section C1, the electrified section D, and a non-electrified section C2, and schematically illustrates charging and discharging timings of the storage battery 41 for realizing the charging rate control.

Here, the charging rate SOC_t indicates the target charging rate of the storage battery 41. Time t_0 indicates a clock time at which the rail vehicle enters the electrified section D from the non-electrified section C1. Time t_1 indicates a clock time at which the charging rate of the storage battery 41 reaches the target charging rate. Time t_2 indicates a clock time at which charging of the storage battery 41 is started. Time t_3 indicates a clock time when the rail vehicle enters the non-electrified section C2 from the electrified section D. $\Delta Q$ indicates a regenerative power amount charged in the storage battery 41 from the time t_2 to the time t_3. The regenerative power amount $\Delta Q$ is power stored through the regenerative brake or the like of the rail vehicle 10, and is schematically added at the time t_3 in FIG. 5.

First, as a first step of the control processing, the control unit 61 acquires, at the timing at which the rail vehicle enters the electrified section D from the non-electrified section C1, the time t_0 of that timing from the timing device 80.

Next, as a second step of the control processing, the control unit 61 acquires, at the timing of the time t_0, a charging rate SOC_0 (%) of the storage battery 41 and a remaining amount of power Q_0 (Wh) of the storage battery 41 from the charging rate detector 70. In a case where the charging rate SOC_0 at the time when the rail vehicle enters the electrified section D is larger than the target charging rate SOC_t acquired from the target charging rate data 62, the control unit 61 operates the auxiliary machine 50. As a result, the power of the storage battery 41 is consumed and the charging rate is lowered.

Here, the time t_1 at which the charging rate reaches the target charging rate SOC_t is expressed by the following [Equation 1] by using power consumption P_s of the auxiliary machine 50 acquired from the table of the auxiliary machine power consumption data 65.

$$[\text{Equation } 1]$$

$$\text{t\_1} = \text{t\_0} + 3600 \times [\text{Q\_0} - \text{Q\_t}] \div \text{P\_s}$$

Note that in a case where the unit of the time t input from the timing device 80 is not "second", but "hour", the coefficient "3600" is unnecessary. Furthermore, The Q_t indicates the amount of power of the storage battery 41 at the target charging rate SOC_t.

When the time t_0 has passed, the control unit 61 continues to acquire time information from the timing device 80. Then, control is performed to stop the supply of power from the storage battery 41 to the auxiliary machine 50 at the timing at which the time reaches the time t_1 specified by [Equation 1]. Furthermore, in a case where regenerative electric power is generated while the rail vehicle is traveling in the electrified section D until the time t_2, the generated regenerative electric power is made to flow through the overhead contact line instead of being stored in the storage battery 41, and the charging rate of the battery is maintained at the target charging rate SOC_t. Note that the above processing is control performed in a case where the charging rate SOC_0 is higher than the target charging rate SOC_t, and control performed in a case where SOC_0 < SOC_t is satisfied will be described later.

As a third step, an amount of power Q* to be consumed during traveling of the rail vehicle in the non-electrified section C2 is calculated from the table of the travel data 64. Moreover, a timing t_2 at which charging of the amount of power Q* to be consumed during traveling of the rail vehicle in the non-electrified section C2 is started is calculated by using the table of the acceptable current value data 63 and information acquired from the temperature detector 71.

First, a calculation procedure of the amount of power Q* to be consumed during traveling of the rail vehicle in the non-electrified section C2 will be described. As illustrated in FIG. 4, in a case where the charge/discharge power P(k) is described in item 647 in the table of the travel data 64, this can be used. A time point at which the non-electrified section C2 starts is defined as an order k, and a time point at which the non-electrified section C2 ends is defined as an order k + m. A value of the power consumption amount Q*(Wh) in this case can be calculated by a method of integrating charge/discharge power P(k) to P(k + m) of the battery with respect to the time t(k) for each of the order k where the non-electrified section C2 starts to the order k + m where the non-electrified section C2 ends. The calculation formula is described below.

$$[\text{Equation } 2]$$

$$\text{Q*} = \text{P(k)} \times (\text{t(k + 1)} - \text{t(k)}) \div 3600$$

$$+ \text{P(k + 1)} \times (\text{t(k + 1)} - \text{t(k)}) \div 3600$$

$$+ \cdots$$

$$+ \text{P(k + m)} \times (\text{t(k + m + 1)} - \text{t(k + m)}) \div 3600$$

Here, in a case where the unit of the time t(k) is not "second", but "hour", division by 3600 is unnecessary. On the other hand, in a case where item 645 (voltage value V) and item 646 (current value I) are recorded in the table of the travel data 64, the power consumption amount Q*(Wh) in the non-electrified section C2 can be calculated by substituting P(k) = V(k) × I(k) into the above [Equation 2].

By using the power consumption amount Q*(Wh) and the minimum amount of power Qmin required for travel of the non-electrified section C2 in item 644 (FIG. 4) of the table of the travel data 64, amount of power to be stored in the storage battery 41 when the rail vehicle enters the non-electrified section C2 is expressed as Qmin + Q*(Wh). Here, in a case where the charging rate is controlled to the target charging rate SOC_t in the electrified section D, the corresponding amount of power is expressed as Q_t. Then, the storage battery 41 needs to be newly charged with the amount of power of Qmin + Q* - Q_t(Wh) by the time the rail vehicle enters the next non-electrified section C2 from the electrified section D.

A period of time Δt required to charge the storage battery 41 with the amount of power Qmin + Q* - Q_t that needs to be newly charged is expressed by the following [Equation 3].

[Equation 3]

$$\Delta t = 3600 \times [Qmin + Q* - Q\_t] \div [I*(T) \times Vave]$$

Here, T is a temperature of the storage battery 41 acquired from the temperature detector 71. I*(T) is an acceptable current value of the battery at the temperature T acquired from the table of the acceptable current value data 63. Vave is an average voltage of the storage battery 41 during charging.

Here, a case where a battery is charged by an intermittent charging method where charging for t' seconds and pausing for t" seconds are repeated will be described. In this case, the charging period of time $\Delta t$ in the above [Equation 3] is extended to $(1 + t''/t') \times \Delta t$. Therefore, the time $t\_2$ at which charging of the storage battery 41 is started in the electrified section D is obtained by $t\_2 = t\_3 - (1 + t''/t') \times \Delta t$. Moreover, in a case where improvement in charging rate by the regenerative electric power is expected between the times $t\_2$ and $t\_3$, the regenerative power amount is defined as $\Delta Q$. In consideration of the regenerative power amount $\Delta Q$, the value of $t\_2$ is approximately expressed as the following [Equation 4].

[Equation 4]

$$t\_2 = t\_3 - 3600 \times (1 + t''/t') \times [Qmin + Q* - Q\_t -$$

$$\Delta Q] \div [I*(T) \times Vave]$$

Here, in a case where the unit of the time t input from the timing device 80 is not "second, but "hour", the coefficient 3600 is unnecessary. The control unit 61 continues to acquire time information from the timing device 80, and starts charging of the storage battery 41 from the overhead contact line 20 with the charging current value I* at the timing at which the time reaches $t\_2$ specified by the above [Equation 4].

With the procedure described above, the time $t\_1$ at which the charging rate of the storage battery 41 reaches the target charging rate SOC_t and the time $t\_2$ at which charging is started can be calculated. The example of FIG. 5 illustrates the control processing of the power reception rate of the storage battery 41 in a case where time $t\_1$ < time $t\_2$ is satisfied. In this case, after the rail vehicle enters the electrified section D at the time $t\_0$ in FIG. 5, the power of the storage battery 41 is consumed by the auxiliary machine 50, and the supply of power from the storage battery 41 to the auxiliary machine is stopped at the time $t\_1$. Furthermore, charging of the storage battery 41 by an intermittent charging method is started from the time $t\_1$, and charging of the battery is continued until the time $t\_3$ at which the rail vehicle enters the next non-electrified section C2.

In the first example of the method for controlling the charging rate described above, the charging rate of the storage battery 41 is temporarily reduced to the target charging rate SOC_t. Therefore, it is possible to reduce the degradation of the storage battery 41, thereby enabling the storage battery 41 to be used stably for prolonged periods of time. Furthermore, by calculating the time $t\_2$ at which charging is started, it is possible to appropriately charge the amount of power required for travel in the non-electrified section C2. In charging at this time, the acceptable current value is taken into consideration. Therefore, it is possible to prevent degradation of the storage battery 41 due to charging and to secure the time at the target charging rate SOC_t as much as possible. Note that the charging rate of the storage battery 41 may be controlled to be no higher than the charging rate SOC_t as long as the amount of power required for travel in the non-electrified section C2 can be secured. However, it is preferable not to reduce the charging rate than the charging rate at which the operation of the storage battery 41 is guaranteed.

(Second example of method for controlling charging rate)

FIG. 6 is a schematic diagram illustrating a second example of the method for controlling the charging rate of the storage battery in the power storage system of the present invention. In FIG. 6, the vertical axis represents the charging rate (%), and the horizontal axis represents time (s). FIG. 6 illustrates a case where time $t\_1$ > time $t\_2$ is satisfied in comparison with the first example of the method for controlling the charging rate illustrated in FIG. 5. Note that the same reference numerals are used for the same parts as those in the first example of the method for controlling the charging rate, and parts not specifically described have the same description omitted.

In a case where the time $t\_1$ (time at which the charging rate reaches the target charging rate SOC_t) > time $t\_2$ (a timing at which charging is started) is satisfied, the control processing of the charging rate of the storage battery 41 is as illustrated in FIG. 6. The control unit 61 tries to reduce the charging rate to the target charging rate SOC_t from the time $t\_0$, but in order to reach the amount of power required for travel in the non-electrified section C2, it is necessary to start charging before reaching the target charging rate SOC_t, at a position S of time t_4.

Specifically, after the rail vehicle enters a specific electrified section D at t_0, the power of the storage battery 41 is consumed by the auxiliary machine 50, and the supply of power from the storage battery 41 to the auxiliary machine 50 is stopped and charging of the storage battery 41 is started at the time t_4. Charging of the storage battery 41 is continued until the time t_3 at which the rail vehicle enters the next non-electrified section C2. At the point of the time t_3, the amount of power required for travel in the non-electrified section C2 is secured. Here, the time t_4 is given by the following [Equation 5].

[Equation 5]

$$t\_4 = \{I*(T)V\_ave \times t\_3 + (1 + t''/t')[3600 \times (Qmin +$$

$$Q* - \Delta Q) - P\_s \times t\_0]\}/\{I*(T)V\_ave + (1 + t''/t')P\_s\}$$

As described above, in the second example of the method for controlling the charging rate, the charging rate of the storage battery 41 is not reduced to the target charging rate SOC_t but is reduced toward the target charging rate SOC_t as much as possible. Therefore, it is possible to reduce the degradation of the storage battery 41, thereby enabling the storage battery 41 to be used stably for prolonged periods of time. That is, even in a case where the rail vehicle exists in the electrified section D for a short period of time, it is possible to reduce the degradation of the storage battery 41 while securing the amount of power required in the next non-electrified section C2.

(Third example of method for controlling charging rate)

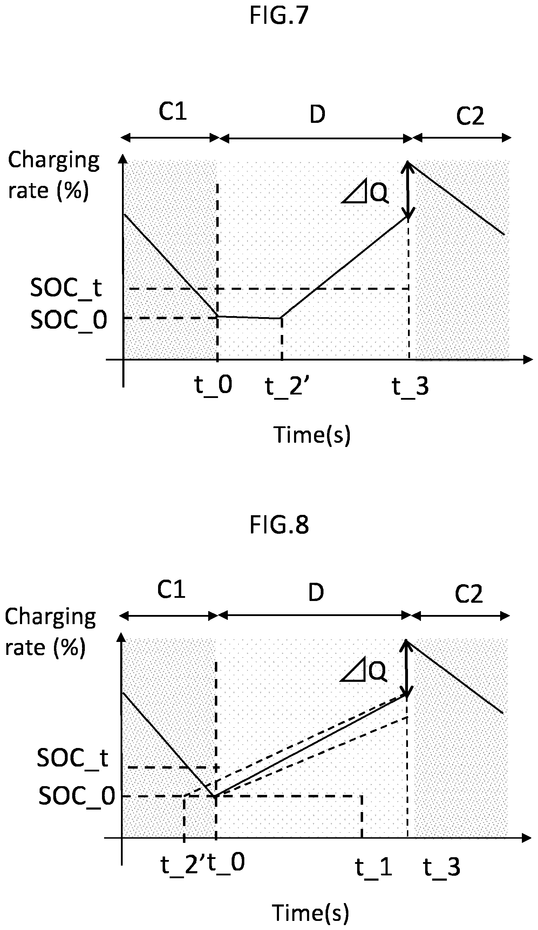

FIG. 7 is a schematic diagram illustrating a third example of the method for controlling the charging rate of the storage battery in the power storage system of the present invention. In FIG. 7, the vertical axis represents the charging rate (%), and the horizontal axis represents time (s). In the third example of the method for controlling the charging rate in FIG. 7, control processing in a case where the charging rate SOC_0 when the rail vehicle enters the electrified section D from the non-electrified section C1 is lower than the target charging rate SOC_t (SOC_0 < SOC_t) is illustrated in comparison with the first example of the method for controlling the charging rate illustrated in FIG. 5. Note that the same reference numerals are used for the same parts as those in the first example of the method for controlling the charging rate, and parts not specifically described have the same description omitted.

In this case, after the rail vehicle enters the electrified section D at the time t_0, the charging rate of the storage battery 41 is maintained at SOC_0. Then, charging of the storage battery 41 is started at time t_2'. This charging is continued until the time t_3 at which the rail vehicle enters the next non-electrified section C2. Here, the time t_2' of starting charging can be obtained by rewriting Q_t (the amount of power of the storage battery 41 at the target charging rate SOC_t) in [Equation 4] in the first example of the method for controlling the charging rate described above to Q_0 (the amount of power of the storage battery 41 at t_0), and is given by the following [Equation 6].

[Equation 6]

$$t\_2' = t\_3 - 3600 \times (1 + t''/t') \times [Qmin + Q* - Q\_0 -$$

$$\Delta Q] \div [I*(T) \times Vave]$$

As described above, in the third example of the method for controlling the charging rate, in a case where SOC_0 < SOC_t is satisfied, the charging rate of the storage battery 41 is maintained at SOC_0 lower than the target charging rate SOC_t. Therefore, it is possible to further reduce the degradation of the storage battery 41, thereby enabling the storage battery 41 to be used for prolonged periods of time. Furthermore, by calculating the time t_2' at which charging is started, it is possible to appropriately charge the amount of power required for travel in the non-electrified section C2. Note that, alternatively, the charging rate can be temporarily increased to SOC_t by charging the storage battery 41 from the time t_0. In this case, thereafter, similarly to the first example (FIG. 5) of the method for controlling the charging rate, it is sufficient to perform control to maintain the charging rate at SOC_t and to start charging from the time t_2.

(Fourth example of method for controlling charging rate)

FIG. 8 is a schematic diagram illustrating a fourth example of the method for controlling the charging rate of the storage battery in the power storage system of the present invention. In FIG. 8, the vertical axis represents the charging rate (%), and the horizontal axis represents time (s). In the fourth example of the method for controlling the charging rate in FIG. 8, control processing in a case where the time $t\_2'$ of starting charging of the storage battery 41 comes earlier than the time $t\_0$ at which the rail vehicle enters the electrified section D ($t\_0 > t\_2'$) is illustrated. Then, FIG. 8 illustrates a case where the charging rate SOC_0 is lower than the target charging rate SOC_t. In FIG. 8, the same reference numerals are used for the same parts as those in the third example of the method for controlling the charging rate, and parts not specifically described have the same description omitted.

In a case where the storage battery 41 is charged with the acceptable current value, charging is required to be started at the time $t\_2'$ (see a dashed line from $t\_2'$ in FIG. 8). However, the time $t\_2'$ is in the non-electrified section C1 and hence, charging can be started only from the time $t\_0$. Therefore, when charging is started from the time $t\_0$ at the charging speed illustrated in the first example (FIG. 5) of the charging rate control method, the required charging rate cannot be secured (see a dashed line from $t\_0$ in FIG. 8). That is, in order to cause the charging rate of the storage battery 41 to reach a prescribed value before the rail vehicle enters the non-electrified section C2, the charging current value I of the storage battery 41 needs to be set to a value larger than the acceptable current value.

On the other hand, when the charging current value increases, Joule heat generated during charging increases, and the battery temperature becomes high. As a result, degradation of the battery progresses. Therefore, it is preferable to maintain the value of the charging current as small as possible. That is, it is necessary to perform control processing to start charging from the time $t\_0$ immediately after the vehicle enters the electrified section D and charge with the charging current value with which the charging rate reaches the prescribed charging rate at the clock time $t\_3$ at which the vehicle enters the non-electrified section C2. The charging current value I in this case is given by the following [Equation 7].

[Equation 7]

$$I = 3600 \times (1 + t''/t') \times [Qmin + Q* - Q\_0 - \Delta Q] \div [Vave \times (t\_3 - t\_0)]$$

As described above, in the fourth example of the method for controlling the charging rate, in a case where $t\_0 > t\_2'$ is satisfied, it is possible to reduce the degradation of the storage battery 41 by reducing Joule heat generated during charging as much as possible. Moreover, it is possible to appropriately charge the amount of power required for travel in the non-electrified section C2.

Note that, although FIG. 8 illustrates control processing in a case where the time $t\_2'$ of starting charging of the storage battery 41 comes earlier than the time $t\_0$ at which the rail vehicle enters the electrified section D, the present invention is similarly applicable even the time $t\_2'$ is replaced with the time $t\_2$. Furthermore, although FIG. 8 illustrates a case where the charging rate SOC_0 is lower than the target charging rate SOC_t, the present invention is similarly applicable even to a case where the charging rate SOC_0 is higher than the target charging rate SOC_t.

As described above, when the rail vehicle enters the electrified section D, the control unit 61 performs the series of calculations described above to determine the charging schedule and the charging current value of the storage battery 41. As a result, it is possible to reduce the degradation of the storage battery 41 while maintaining the charging rate in the electrified section D low. Moreover, the charging rate of the storage battery 41 can be appropriately controlled so as not to impede the travel of the rail vehicle in the next non-electrified section C2.

As described above, with the charging rate control system according to the embodiment, control is performed to reduce the charging rate of the storage battery (secondary battery) in the electrified section to a prescribed value, and to increase the charging rate of the storage battery (secondary battery) at an appropriate timing in a period from when the rail vehicle enters the electrified section to when the rail vehicle enters the non-electrified section, thereby enabling a storage battery (secondary battery) to be used stably for prolonged periods of time.

Note that the present invention is not limited to the above embodiment, and includes various modifications. For example, each of the above embodiments has been described in detail in order to describe the present invention in an easy-to-understand manner, and is not necessarily limited to those having all the described configurations. Furthermore, a part of the configuration in one embodiment can be replaced with the configuration in another embodiment, and the configuration in another embodiment can be added to the configuration in one embodiment. Furthermore, it is possible to add, delete, and replace other configurations for a part of the configuration in each embodiment.

Furthermore, some or all of the configurations, functions, processing units, processing means, and the like described in each embodiment may be realized by hardware, for example, by designing with an integrated circuit or the like. Furthermore, each of the above configurations, functions, and the like may be realized by software by a processor interpreting and executing a program for realizing each function. Information such as a program, a table, and a file for realizing each function can be stored in a recording device such as a memory, a hard disk, and a solid state drive (SSD), or a recording medium such as an IC card, an SD card, and a DVD.

Furthermore, control lines and information lines considered to be necessary for description are illustrated, and control lines and information lines are provided as necessary in an actual product. For example, all the components may be connected to each other.

Reference Signs List

| | |
|---|---|
| 1 | system |
| 10 | rail vehicle |
| 20 | overhead contact line |
| 30 | route |
| 31, 33 | point |
| 40 | power storage system |
| 41 | storage battery |
| 50 | auxiliary machine |
| 51 | driving device |
| 61 | control unit |
| 62 | target charging rate data |
| 63 | acceptable current value data |
| 64 | travel data |
| 65 | auxiliary machine power consumption data |
| 70 | charging rate detector |
| 71 | temperature detector |
| 80 | timing device |
| 640 to 648 | item |
| A | degradation characteristic in case of low charging rate |
| B | degradation characteristic in case of high charging rate |
| C, C1, C2 | non-electrified section |
| D | electrified section |

**Claims**

1.  A power storage system comprising:

    a storage battery provided to a rail vehicle that can travel in an electrified section and a non-electrified section; and
    a control unit that controls a charging rate of the storage battery,
    wherein the control unit performs control to reduce the charging rate of the storage battery to no higher than a target charging rate when the rail vehicle enters the electrified section from the non-electrified section, and then performs control to start charging of the storage battery at a prescribed timing in order to achieve the charging rate required for travel in a next non-electrified section.

2.  The power storage system according to claim 1, wherein the prescribed timing at which charging is started is calculated by using an acceptable current value of the storage battery.

3.  The power storage system according to claim 2, wherein the charging rate of the storage battery is controlled to be reduced by an auxiliary machine consuming power, the auxiliary machine being provided to the rail vehicle.

4.  The power storage system according to claim 3, comprising a timing device that acquires time information, wherein

    the control unit is allowed to acquire a table of travel data,
    the table of the travel data is a data table indicating a correspondence relationship among information of a position and time of the rail vehicle, time at which transition occurs from the electrified section to the non-electrified section, a minimum amount of power required for travel of the rail vehicle in the non-electrified section, and a set of a charge/discharge current and a voltage or a charge/discharge power in the storage battery, and the control unit calculates an amount of power required in the next non-electrified section from the table of the travel data, calculates a timing of starting charging of the storage battery by using the obtained required amount of power, the acceptable current value, and the target charging rate, and charges the storage battery, by using the time information input from the timing device, from the prescribed timing of starting charging until the transition to the next non-electrified section.

5. The power storage system according to claim 4, wherein

in the table of the travel data, a value of either the set of the charge/discharge current and the voltage or the charge/discharge power in the storage battery is recorded according to a day of a week and/or a month, and the control unit calculates the amount of power required in the next non-electrified section, from corresponding information in the table of the travel data during traveling.

6. The power storage system according to claim 2, comprising a temperature detector that detects a temperature of the storage battery, wherein

the control unit is allowed to acquire a table of acceptable current value data, the table of the acceptable current value data is a data table indicating a correspondence relationship between the acceptable current value and the temperature of the storage battery, and the control unit determines the acceptable current value of the storage battery by using information of the temperature of the storage battery input from the temperature detector and information in the table of the acceptable current value data.

7. The power storage system according to claim 4, comprising a charging rate detector that detects the charging rate of the storage battery, wherein

the control unit is allowed to acquire a table of auxiliary machine power consumption data, the table of the auxiliary machine power consumption data is a data table that records power consumption of the auxiliary machine, and the control unit receives input of the charging rate of the storage battery from the charging rate detector at a timing at which the rail vehicle enters the electrified section from the non-electrified section, calculates time at which the charging rate of the storage battery reaches the target charging rate by using the input charging rate, the time information acquired from the timing device, and the power consumption of the auxiliary machine acquired from the table of the auxiliary machine power consumption data, stops supply of power from the storage battery to the auxiliary machine at the time calculated, and maintains the charging rate of the storage battery at the target charging rate until charging is started at the prescribed timing.

8. The power storage system according to claim 1, wherein the storage battery is charged by using power from an overhead contact line provided to the electrified section.

9. A power storage method for controlling, by a control unit, a charging rate of a storage battery provided to a rail vehicle that can travel in an electrified section and a non-electrified section, the method comprising:

performing control to reduce the charging rate of the storage battery to no higher than a target charging rate when the rail vehicle enters the electrified section from the non-electrified section; and then, performing control to start charging of the storage battery at a prescribed timing in order to achieve the charging rate required for travel in a next non-electrified section.

10. The power storage method according to claim 9, wherein the prescribed timing at which charging is started is calculated by using an acceptable current value of the storage battery.

11. The power storage method according to claim 10, wherein the control to reduce the charging rate of the storage battery to no higher than the target charging rate is performed by causing an auxiliary machine provided to the rail vehicle to consume power to reduce the charging rate.

**12.** The power storage method according to claim 11, wherein the prescribed timing at which charging is started is calculated by calculating an amount of power required in the next non-electrified section from a table of travel data indicating a correspondence relationship among information of a position and time of the rail vehicle, time at which a transition occurs from the electrified section to the non-electrified section, a minimum amount of power required for travel of the rail vehicle in the non-electrified section, and a set of a charge/discharge current and a voltage or a charge/discharge power in the storage battery and using the obtained required amount of power, the acceptable current value, and the target charging rate,
the method comprising charging the storage battery, by using time information input from a timing device provided to the rail vehicle, from the prescribed timing until the transition to the next non-electrified section.

**13.** The power storage method according to claim 12, wherein

in the table of the travel data, a value of either the set of the charge/discharge current and the voltage or the charge/discharge power in the storage battery is recorded according to a day of a week and/or a month, and as the amount of power required in the next non-electrified section, the amount of power required in the next non-electrified section is calculated from corresponding information in the table of the travel data during traveling.

**14.** The power storage method according to claim 10, wherein the acceptable current value of the storage battery is determined by using information of a temperature of the storage battery input from a temperature detector provided to the rail vehicle and information from a table of acceptable current value data indicating a correspondence relationship between the acceptable current value and the temperature of the storage battery.

**15.** The power storage method according to claim 12, wherein the control to reduce the charging rate of the storage battery to no higher than the target charging rate includes: receiving input of the charging rate of the storage battery from a charging rate detector provided to the rail vehicle at a timing at which the rail vehicle enters the electrified section from the non-electrified section; calculating time at which the charging rate of the storage battery reaches the target charging rate by using the input charging rate, the time information acquired from the timing device, and power consumption of the auxiliary machine acquired from a table of auxiliary machine power consumption data in which the power consumption of the auxiliary machine is recorded; stopping supply of power from the storage battery to the auxiliary machine at the time calculated; and maintaining the charging rate of the storage battery at the target charging rate until charging is started at the prescribed timing.

**16.** The power storage method according to claim 9, wherein the storage battery is charged by using power from an overhead contact line provided to the electrified section.

FIG.1

FIG.2

## FIG.3

Degree of battery degradation

Time

## FIG.4

| k | x(k) (m) | t(k) (s) | T*(k) (s) | Qmin(k)(Wh) | I(k) (A) | V(k) (W) | P(k) (W) |
|---|----------|----------|-----------|-------------|----------|----------|----------|
| 0 | x0 | t0 | 1 | | I0 | V0 | P0 |
| 1 | x1 | t1 | 1 | | I1 | V1 | P1 |
| 2 | x2 | t2 | 1 | | 0 | 0 | 0 |
| 3 | x3 | t3 | 0 | Qx | I3 | V3 | P3 |
| ... | ... | ... | ... | ... | ... | ... | ... |
| n-1 | Xn-1 | tn-1 | 0 | Qx | In-1 | Vn-1 | Pn-1 |
| n | xn | tn | 1 | | In | Vn | Pn |

640  641  642  643  644  645  646  647

FIG.5

FIG.6

## FIG.7

## FIG.8

## INTERNATIONAL SEARCH REPORT

| International application No. |
|---|
| **PCT/JP2021/045968** |

### A. CLASSIFICATION OF SUBJECT MATTER

***B60L 3/00***(2019.01)i; ***B60L 13/00***(2006.01)i; ***B60L 50/53***(2019.01)i; ***B60L 58/12***(2019.01)i; ***H01M 10/44***(2006.01)i;
***H01M 10/48***(2006.01)i; ***H02J 7/00***(2006.01)i; ***H02J 7/04***(2006.01)i
FI:    B60L3/00 S; B60L13/00 D; B60L50/53; B60L58/12; H02J7/00 P; H02J7/00 Y; H02J7/04 L; H01M10/48 P; H01M10/44
       Q; H01M10/48 301

According to International Patent Classification (IPC) or to both national classification and IPC

### B. FIELDS SEARCHED

Minimum documentation searched (classification system followed by classification symbols)

B60L3/00; B60L13/00; B60L50/53; B60L58/12; H01M10/44; H01M10/48; H02J7/00; H02J7/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2017-189062 A (HITACHI LTD) 12 October 2017 (2017-10-12) paragraphs [0015]-[0078], fig. 1-14 | 1-3, 6, 8-11, 14, 16 |
| A | | 4-5, 7, 12-13, 15 |
| Y | JP 2012-135168 A (HONDA MOTOR CO LTD) 12 July 2012 (2012-07-12) paragraph [0002] | 1-3, 6, 8-11, 14, 16 |
| Y | JP 2015-136203 A (NISSAN MOTOR) 27 July 2015 (2015-07-27) paragraphs [0018]-[0019], fig. 3 | 2-3, 6, 10-11, 14 |
| Y | JP 2009-273198 A (KAWASAKI HEAVY IND LTD) 19 November 2009 (2009-11-19) paragraphs [0033], [0035] | 3, 11 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 January 2022** | **25 January 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
**Information on patent family members**

International application No.

**PCT/JP2021/045968**

| Patent document<br>cited in search report | | | Publication date<br>(day/month/year) | Patent family member(s) | Publication date<br>(day/month/year) |
|---|---|---|---|---|---|
| JP | 2017-189062 | A | 12 October 2017 | (Family: none) | |
| JP | 2012-135168 | A | 12 July 2012 | (Family: none) | |
| JP | 2015-136203 | A | 27 July 2015 | (Family: none) | |
| JP | 2009-273198 | A | 19 November 2009 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017189062 A